(19) Europäisches Patentamt

European Patent Office

Office européen des brevets

(11) Veröffentlichungsnummer : **0 405 199 B1**

(12) **EUROPÄISCHE PATENTSCHRIFT**

(45) Veröffentlichungstag der Patentschrift :
**07.10.92 Patentblatt 92/41**

(21) Anmeldenummer : **90110771.4**

(22) Anmeldetag : **07.06.90**

(51) Int. Cl.⁵ : **B01D 33/04,** B01D 33/50

(54) **Verfahren und Einrichtung zum Voreindicken von Schlamm.**

(30) Priorität : **30.06.89 CH 2452/89**

(43) Veröffentlichungstag der Anmeldung :
**02.01.91 Patentblatt 91/01**

(45) Bekanntmachung des Hinweises auf die
Patenterteilung :
**07.10.92 Patentblatt 92/41**

(84) Benannte Vertragsstaaten :
**AT BE CH DE DK ES FR GB GR IT LI LU NL SE**

(56) Entgegenhaltungen :
**AT-B- 386 819**
**GB-A- 2 068 760**
**GB-A- 2 068 761**
**US-A- 3 190 451**

(73) Patentinhaber : **HOPPE + PARTNER**
**Vorstadt 26A**
**CH-6301 Zug (CH)**

(72) Erfinder : **Hoppe, Willy Franz**
**Eichstrasse 18**
**CH-6330 Cham (CH)**

(74) Vertreter : **Patentanwälte Schaad, Balass &**
**Partner**
**Dufourstrasse 101 Postfach**
**CH-8034 Zürich (CH)**

## Beschreibung

Die Erfindung betrifft eine Einrichtung zum Voreindicken von Schlammwasser nach dem Oberbegriff von Anspruch 1.

Einrichtungen dieser Art sind bekannt. So ist in der GB-A 2 068 760 ein solcher Apparat dargelegt, bei welchem der Schlamm auf das obere Trum streifenförmig aufgegeben wird. Die Schlammlage bedeckt demnach nur einen Teil der Breite des Bandes, um den ungehinderten Durchtritt von Schlammwasser durch das Band in den zwischen den Schlammstreifen liegenden unbedeckten Zonen zu ermöglichen. Durch mit dem oberen Trum zusammenwirkende Pflugelemente wird zudem anschliessend angestrebt, die Schlammlage durch Umschichtung eines Teiles in die freigelassenen Zonen zu vergleichsmässigen und dadurch die Entwässerung weiter zu fördern.

Bei einer weiteren bekannten Einrichtung dieser Art nach der GB-A 2 068 761 wird am Ende des oberen Trums und bevor der Schlamm von diesem abgeschält wird, dieser temporär angestaut, um in der sich bildenden Anhäufung einen Druck zu erzeugen, welcher den im auf dem Band ausgebreiteten Zustand stattfindenden Entwässerungsvorgang ergänzt.

Aus der AT-B 386 819 ist weiterhin eine Einrichtung bekannt, bei welcher auf einem ersten Filterband behandelter Schlamm auf ein zweites Filterband zur weitern Vorentwässerung abgeworfen wird, das eine gegensinnige Bandlaufrichtung aufweist.

Trotz der zusätzlichen Massnahmen und Mittel zur Unterstützung oder Ergänzung des Entwässerungsvorganges auf dem Band dieser bekannten Einrichtungen, gelingt es nicht in der Vorentwässerungsstufe Werte an Trockensubstanz zu erreichen, die über den mittels Absetzbecken erreichbaren liegen. Bei einigen dieser Massnahmen besteht überdies die Gefahr einer durch normales Auswaschen im Umlauf nicht mehr rückgängig zu machenden Verstopfung der Zwischenräume oder Poren im Filtermaterial des Bandes.

Aufgabe der Erfindung ist die Voreindickung von Schlammwasser ohne Erhöhung des Energieaufwandes und ohne zusätzliche Umschichtungsmassnahmen auf erhebliche gesteigerte Trockensubstanzwerte zu ermöglichen.

Die erfindungsgemässe Lösung dieser Aufgabe gelingt mit den Merkmalen des Kennzeichen von Anspruch 1.

Die Voreindickung wird damit erfindungsgemäss an einer Materialbahn durchgeführt, bei welcher schon die dem aufgegebenen Schlammwasser dargebotene Filterlage bei hoher Trennfähigkeit eine hohe Wasserdurchlässigkeit aufweist. Die Wasserdurchlässigkeit der Ableitlage ist demgegennüber noch grösser und diese bildet auch Strömungswege in der Erstreckung der Lage selbst. Die Ausgestaltung der Vlieslagen ist dank der besonderen Mittel nicht durch mit der Zugfestigkeit des Bandes zusammenhängende Aufgaben belastet.

Gemäss einer bevorzugten Ausführungsform der erfindungsgemässen Einrichtung werden Zugkräfte und Abstützfunktion von einer Trägerbahn übernommen.

Die vorteilhaften Eigenschaften der hohen Wasserleitfähigkeit der Vlieslagen kommen bei einem bevorzugten in Bewegungsrichtung nach aufwärts geneigten Verlauf des oberen Trums besonders zur Geltung.

Die erfindungsgemässe Einrichtung ist nachfolgend anhand von zwei Ausführungsbeispielen derselben und unter Bezugnahme auf die Zeichnung näher erläutert. Es zeigen:

Fig. 1 schematisch im Aufriss eine erste Ausführungsform der erfindungsgemässen Einrichtung; und

Fig. 2 schematisch eine zweite Ausführungsform in einer Fig. 1 entsprechenden Darstellung.

Mit 2 ist in der Zeichnung allgemein ein endloses Band bezeichnet, das eine wasserdurchlässige Trägerbahn 4, z.B. aus Drahtgewebe sowie eine durch ein Transmissivitätspaket gebildete Bahn 6. Die Trägerbahn 4 ist bestimmt, Zug- und Traglasten aufzunehmen. Das Transmissivitätspaket besitzt zwei Vlieslagen aus Kunststofffasern und die beiden Lagen unterscheiden sich durch ihre Dichte und gegebenenfalls ihre Dicke. Während der oberen bzw. äusseren Lage mit höherer Dichte die Aufgabe zukommt, als Filter in Kontakt mit dem Schlammwasser den eigentlichen Trennvorgang auszuführen, ist die andere Lage für den beschleunigten Abtransport des Wasseranteiles als Klarlauf besorgt. Bei der äusseren Lage kann es sich beispielsweise um ein sogenanntes FLN-Geotextil handeln, während die andere Lage beispielsweise aus FLN- SUPERDRAIN (Marke der Firma Landolt) gebildet ist. Das Band 2 umschlingt vier in einem nicht dargestellten Rahmenaufbau drehbar gelagerte Rollen 10 bzw 12 und liegt mit seiner Trägerbahn 4 auf diesen auf. Jede der beiden Rollen 10 ist über einer der Rollen 12 angeordnet und die Rollen 10 bzw. 12 sind horizotal voneinander distanziert. Eine der Rollen 10 steht mit einem nicht dargestellten Antrieb in Verbindung, durch welchen dem Band 2 eine Umlaufbewegung mit 0,5 m/sec im Uhrzeigersinn erteilt wird. Die sich jeweils zwischen den Rollen 10 bzw. 12 erstreckenden Bandabschnitte bilden ein oberes Trum 8 bzw. ein unteres Trum 9.

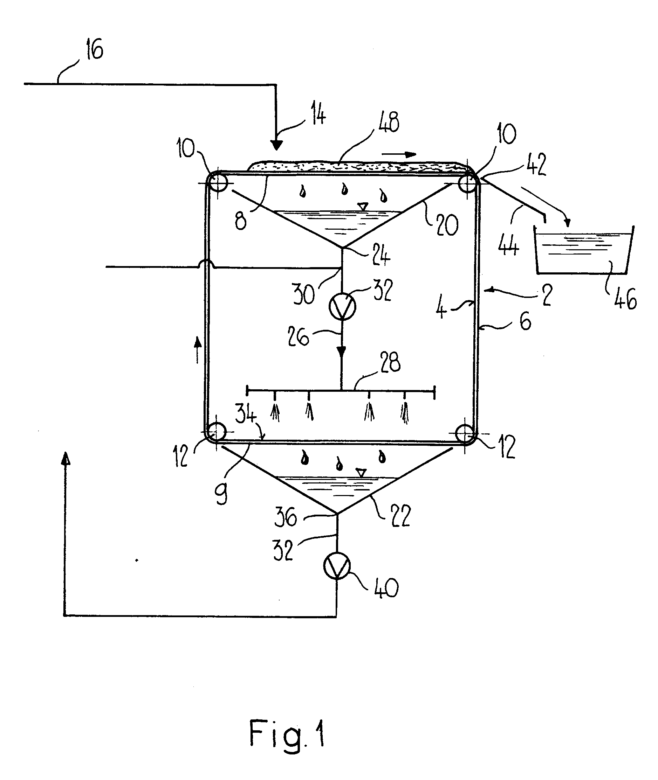

Bei 14 ist in Fig. 1 eine längliche Aufgabedüse angedeutet, die sich etwa über die Breite des Bandes 2 erstreckt und welche durch eine Leitung 16 mit einer nicht dargestellten Quelle von Schlammwasser, also z.B. der Reinigungsstelle von Zuckerrüben einer entsprechenden Fabrik verbunden ist. Wie dargestellt, befindet sich die Düse 14 oberhalb des oberen Trums 8 und in einem Abstand von dessen auflaufseitigem Ende, so, dass das sich vom Aufgabeort allseitig ausbreitende Schlammwasser nicht über die entsprechende Rolle 10 abströmen kann. Um ein seitliches Ueberfliessen der Trumränder zu verhindern, können entlang derselben verlaufende, nicht dargestellte, stationäre Begrenzungswände vorgesehen sein.

Unterhalb der beiden Trums 8 und 9 ist je ein Sammelbecken 20 bzw. 22 angeordnet, das sich beidseitig bis nahe an die Rollen 10 bzw 12 erstreckt. Beide Sammelbecken haben eine Breite, die etwas grösser ist als jene des Bandes 2. Das Sammelbecken 20 besitzt einen Auslass 24, der über eine Leitung 26 mit einem allgemein mit 28 bezeichneten Satz von Waschdüsen verbunden ist. Die Leitung 26 ist über einen Anschluss 30 mit einer nicht dargestellten Quelle von Zusatzwasser verbunden und enthält diesem nachgeschaltet eine Pumpe 32 zur Druckerhöhung des aus dem Waschdüsensatz austretenden Wassers. Der Waschdüsensatz 28 ist ausgebildet, um Wasser unter Druck gleichmässig verteilt auf die Oberfläche 34 des unteren Trums 9 zu spritzen. Das Sammelbecken 22 besitzt einen Auslass 36, der über eine Förderpumpe 40 enthaltende Leitung 38 mit einem nicht dargestellten Verbraucher und/oder einem Klärbecken verbunden ist.

Der Auslass 24 kann mittels einer nicht dargestellten Leitung zusätzlich zur Leitung 16 ebenfalls mit Verbraucher und/oder einem Nachklärbecken verbunden sein.

Dem ablaufseitigen Ende des oberen Trums 8 ist mit der Bahn 6 zusammenwirkend ein Abstreifer 42 als Teil einer nach abwärts geneigten Rutsche 44 zugeordnet. Die Rutsche 44 endet über einem Auffangbecken 46, das mit einem nicht dargestellten Bodenablass versehen ist.

Im Betrieb der Einrichtung wird der Aufgabedüse 14 durch die Leitung 16 Schlammwasser in einer durch nicht dargestellte Mittel einstellbaren Menge, z.B. mit einer mittleren Trockensubstanz von 5%, zugeführt. Die Aufgabedüse 14 verteilt das Schlammwasser über die Breite des Bandes 2, die z.B. 2m betragen kann. Mit 48 ist die sich auf dem oberen Trum 8 bildende Schlammschicht, auch Schlammsuppe genannt, angedeutet. Aus dieser Schlammschicht tritt unter Schwerkrafteinwirkung sowie einer vom Material der Bahn 6 ausgeübten Saugwirkung das weniger innig an Schlammpartikel gebundene Wasser in die Bahn 6 ein. Die Verweilzeit der Schlammschicht auf dem oberen Trum 8 sowie in geringerem Mass auch die Schichtdicke bestimmen den Anteil des in die Bahn eintretenden Wassers und damit den beim Abstreifen der Schlammschicht erreichten Grad der Voreindickung, wenn von einem gleichbleibenden Trockensubstanzwert im aufgegebenen Schlammwasser ausgegangen wird. Diese Verweilzeit wird in der Regel bei der Auslegung der Einrichtung durch die Wahl in einem zwischen 0,1 m/sec und 2 m/sec liegenden Bereich der Umlaufgeschwindigkeit des Bandes 2 und die Länge des oberen Trums 8 festgelegt. Jedoch kann es zweckmässig sein, den Antrieb des Bandes 2 mit unterschiedlichen Geschwindigkeiten vorzusehen. Hat die Schlammsuppe das ablaufseitige Ende des oberen Trums 8 erreicht, so wird diese durch den Abstreifer 42 erfasst und vom Band 2 entfernt. Ueber die Rutsche 44 fliesst die Schlammsuppe, die z.B. eine Trockensubstanz von 25% erreicht hat, in das Auffangbecken 46. Der Bodenablass des Auffangbeckens gestattet, dieses periodisch z.B. in ein Transportfahrzeug oder dauernd in eine Förderleitung zu entleeren.

Das Sammelbecken 20 fängt den an der Unterseite sowie an den Ränder des oberen Trums 8 austretenden Klarlauf des sich an der Bahn 6 dauernd abwickelnden Filtriervorganges auf. Dieser Klarlauf wird über den Ablass 24 und die Leitung 26 der Pumpe 32 zugeführt, vermittels welcher aus dem Waschdüsensatz 28 Druckwasser in einer Vielzahl von gleichmässig verteilten Wasserstrahlen gegen das untere Trum 9 des Bandes 2 gespritzt wird. Da den Wasserstrahlen die Unterseite des Bandes 2 zugekehrt ist, durchfliesst das Wasser bezogen auf das obere Trum 8 dieselbe in entgegensetzter Richtung. Die am Band 2 und insbesondere an der Oberfläche der Bahn 6 anhaftenden Schlammpartikel werden durch das Wasser nach dieser Oberfläche hin ausgewaschen, also entgegengesetzt zur Fliessrichung des Schlammwassers oder seines Klarlaufes.

Das Sammelbecken 22 fängt das aus dem unteren Trum 9 austretende Wasser auf, das über die Leitung 38 vermittels der Pumpe 40 dauernd einem Klärbecken zugeführt wird. Wasser aus einem solchen Klärbecken, d.h. dessen Klarlauf kann beispielsweise über den Anschluss 30 der Leitung 26 bzw. dem Düsensatz 28 zugeführt werden, wenn für den Waschvorgang mehr als die im Sammelbecken 20 anfallende Menge benötigt wird. Aus dem Sammelbecken 22 kann Wasser allerdings auch unmittelbar einem weiteren Verbraucher oder Speicherbehälter für denselben zugeführt werden, wenn die dort verlangte Wasserqualität dies erlaubt.

Der Trennvorgang lässt sich dadurch beschleunigen, dass dieser unter Ausnützung der Bewegung der Aufgabefläche, d.h. der Bahn, erfolgt. Dies ist dadurch besonders gut möglich, dass besondere Vorkehrungen für eine Aufkonzentrierung des Schlammwassers durch einen selektiven Transport desselben schon bei seiner Aufgabe auf das Band getroffen werden. Im Ergebnis wird nur ein einen höheren Anteil an Schlammpartikeln aufweisender Teil dieses Schlammwassers infolge höherer Reibung mit dem Band mitgenommen, während einen geringeren Gehalt an Verunreinigungen aufweisendes, und deshalb leichter fliessendes Wasser infolge Gefälle auf der und ind der Bahn (und durch diese hindurch) abfliesst.

Vorzugsweise wird die Bahn deshalb zumindest in einem Bereich unmittelbar vor der Materialaufgabe und im Bereich derselben selbst, in Bewegungsrichtung ansteigend geführt. Grundsätzlich ist dabei der Neigungs-

3

winkel der Bahn so zu wählen, dass in Abhängigkeit von Viskosität des Schlammwassers und der Bandgeschwindigkeit die eher festen Schlammpartikel, sich auf dem Band absetzend, mit diesem eben noch mitbewegt werden, während die flüssigen Anteile über den noch von Schlammwasser freien Bereich abfliessen können. Hierdurch lässt sich durch beschleunigte Abtrennung des Wassers die Voreindickung beschleunigen.

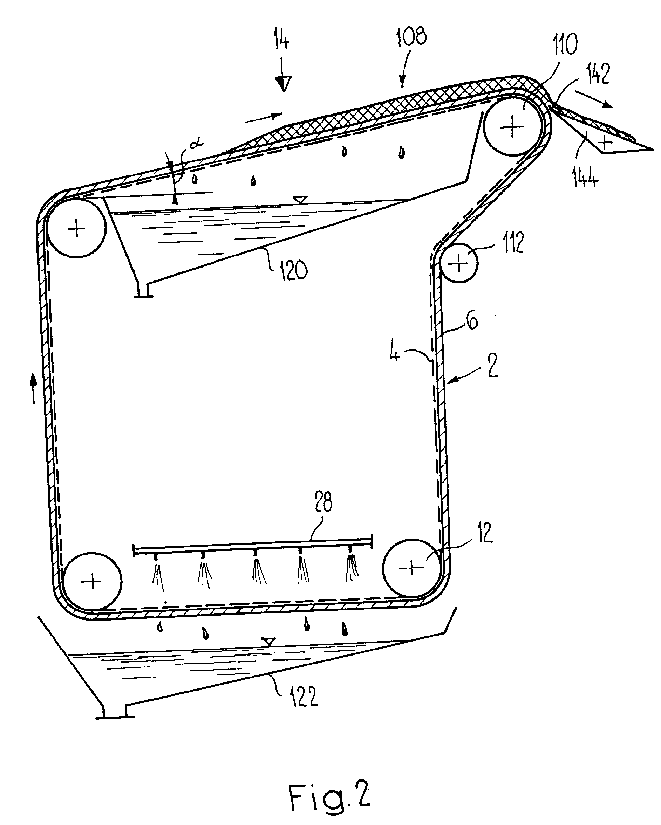

Um die Trennung durch Reibungsunterschiede besonders wirksam zur Anwendung bringen, ist es zweckmässig, wenn entweder der Neigungswinkel der Bahn oder deren Geschwindigkeit, vorzugsweise jedoch beide Grössen einstellbar sind. Damit lassen sich je nach der Zusammensetzung des zu verarbeitenden Schlammwassers, z.B dem Gehalt an Trockensubstanz desselben, die Betriebsbedingungen optimal anpassen. Beispielsweise kann bei einem höheren Anteil an Trockensubstanz des zu verarbeitenden Schlammwassers ein grösserer Neigungswinkel auch bei kleinerer Bahngeschwindigkeit zur Anwendung kommen. Eine Vorrichtung, die eine solche Anpassung erlaubt, ist in Fig. 2 dargestellt und nachstehend beschrieben.

Das in Fig. 2 dargestellte Ausführungsbeispiel entspricht weitgehend demjenigen nach Fig. 1 und unterscheidet sich diesem von hauptsächlich dadurch, dass das hier mit 108 bezeichnete obere Trum nicht horizontal verläuft, sondern vom auflaufseitigen Ende desselben gegen das ablaufseitige Ende hin, d.h. in Umlaufrichtung, ansteigt. Der Neigungswinkel α ist dabei etwa um 50, z.B. zwischen 15° und 20°, einstellbar, wozu die ablaufseitige Rolle 110 in der Höhe z.B. auf einer vertikalen Bahn verschiebbar und feststellbar sein kann. Um der Ausbreitung des wiederum in einstellbarer Menge aufgebbaren Schlammwassers unter dem Einfluss des durch den Neigungswinkel α gebildeten Gefälles Rechnung zu tragen, ist hier die Aufgabestelle 14 etwa über der Längsmitte des oberen Trums 108 angeordnet. Je nach Schlammart können geeignete Neigungswinkel zwischen etwa 5° und 30° liegen, wobei bei der Auslegung der Einrichtung für den bestimmten Anwendungsfall ein geeigneter Verstellbereich in der Grösse von etwa 5° zwischen den vorstehenden Grenzwerten gewählt wird.

Der ablaufseitigen Rolle 110 ist eine Spannrolle 112 zugeordnet, welche gestattet, die sich durch Veränderung des Neigungswinkels des oberen Trums 108 ergebenden Aenderungen der Umschlingungslänge bei gleichbleibender Länge des Bandes 2 auszugleichen. Die Spannrolle 112 kann zu diesem Zweck beispielsweise in horizontaler Richtung verschiebbar und feststellbar gelagert sein. Zusammen mit der ablaufseitigen Rolle 110 ist auch die Rutsche 144 in der Höhe verstellbar, um das Zusammenwirken des Abstreifers 142 mit dem Band 2 aufrecht zu erhalten. Das Sammelbecken 122 erstreckt sich hier wie dargestellt über die Rollen 12 des unteren Trums hinaus, um allenfalls auch an den Enden desselben abtropfendes Wasser aufzufangen.

Wie erwähnt, ist bei diesem Ausführungsbeispiel die Umlaufgeschwindigkeit der Bahn, d.h. der diese antreibenden Rolle, einstellbar und zwar mittels eines verstellbaren Getriebes; so kann z.B. bei einer Minimalgeschwindikeit von 1 m/sec eine Verstellung auf 2 m/sec möglich sein.

Während in der Regel das Band 2 wie beschrieben eine die sich aus dem Umlauf ergebenden Zugkräfte aufnehmende Trägerbahn 4 aufweist, kann auf diese in gewissen Fällen verzichtet werden. Dies ist insbesondere dann möglich, wenn die Zugkräfte im Vergleich zum Dehnungsverhalten des Transmissivitätspaketes der Bahn 6 selbst klein sind bzw. dessen Hohlraumstruktur und damit die Saugfähigkeit und Durchlässigkeit nicht nachteilig beeinflussen.

Es wurde schon darauf hingewiesen, dass die Verweilzeit des Schlammwassers auf dem Transmissivitätspaket der Bahn 6, d.h. auf dem oberen Trum den Grad der Voreindickung bestimmt. Dabei ist es grundsätzlich jedoch möglich, die Voreindickung soweit zu steigern, dass eine Entwässerung in einem Auflandebecken oder durch Zentrifugieren entfallen kann. Jedenfalls ist es mit der erfindungsgemässen Einrichtung möglich, die Eindickung auf 40-45% TS zu steigern.

Die hierzu notwendige Verweilzeit des Schlammwassers in auf dem Transmissivitätspaket ausgebreitetem Zustand muss nicht notwendigerweise ununterbrochen sein. Tatsächlich kann es sich als vorteilhaft erweisen, jeweils nach einer bestimmten Teilzeit eine Umschichtung der sich bildenden Schlammsuppe vorzunehmen, mit dem Ziel, sowohl die Trennung wie auch den Abgang von Wasser in das Transmissivitätspaket zu intensivieren. In einfacher Weise lassen sich solche Umschichtungen dadurch erreichen, dass die Schlammsuppe nach einer vorbestimmten Verweilzeit auf einem ersten Transmissivitätspaket einem zweiten und gegebenenfalls anschliessend weiteren Transmissivitätspaketen übergeben wird.

Mit diesem Ziel ist möglich, die auf der Rutsche 44 mit einer Trockensubstanz von etwa 20% ankommende Schlammsuppe einer zweiten nachgeschalteten Einrichtung gemäss der Erfindung zu übergeben. Das obere Trum der zweiten Einrichtung kann dabei das in der ersten Einrichtung oder Stufe zu einer Schlammsuppe voreingedickte Schlammwasser beispielsweise unmittelbar von der Rutsche der ersten Einrichtung übernehmen, wobei diese Rutsche gleichzeitig das Aufgabemittel der zweiten Einrichtung bildet. Da nach dem Zwischentransport der Schlammsuppe vermittels der Rutsche diese eine Umschichtung oder Umwälzung erfahren hat, kommen andere Teile derselben in unmittelbare Nachbarschaft des betreffenden Transmissivitätspaketes. In der beschriebenen Weise können auch weitere erfindungsgemässe Einrichtungen nachgeschaltet sein.

**Patentansprüche**

1. Einrichtung zum Voreindicken von Schlammwasser, mit einem in einem oberen und einem unteren Trum umlaufend geführten endlosen Band (2), von welchen das obere Trum (8,108) eine Trennstrecke bildet und das untere Trum (9) eine Waschstrecke umfasst, der Waschdüsen (28) zugeordnet sind, Antriebsmitteln um das Band (2) in Umlaufbewegung zu halten, Aufgabemitteln (14), um dem auflaufseitigen Ende des oberen Trum (8,108) benachbart Schlammwasser auf dieses aufzugeben, sowie dem ablaufseitigen Ende des oberen Trums zugeordnete Abstreifmitteln (42, 142), um zurückgehaltenen Schlamm von diesem zu entfernen, dadurch gekennzeichnet, dass das Band (2) eine Bahn (6) aus zwei Lagen von Faservlies unterschiedlicher Dichte, von denen die äussere Lage aus Faservlies höherer Dichte eine Filterschicht und die folgende Lage eine Ableitschicht für den Klarlauf bildet und ferner eine Trägerbahn (4) zur Uebernahme der Zug- und Traglast aufweist.

2. Einrichtung nach Anspruch 1, dadurch gekennzeichnet, dass die Vlieslagen, die vorzugsweise aus Kunstoffasern gebildet sind, auf der Trägerbahn (4) aufliegen.

3. Einrichtung nach Anspruch 1 oder 2, dadurch gekennzeichnet, dass die Abstreifmittel (42) Teil einer Rutsche (44) zur Weiterleitung des voreingedickten Schlammwassers bilden.

4. Einrichtung nach Anspruch 3, dadurch gekennzeichnet, dass dem Ende der Rutsche (44) ein Auffangbecken (46) für das voreingedickte Schlammwasser zugeordnet ist.

5. Einrichtung nach einem der vorangehenden Ansprüche, dadurch gekennzeichnet, dass das obere Trum (108) in Umlaufrichtung der Bahn (2) ansteigt.

6. Einrichtung nach Anspruch 1 od 5, dadurch gekennzeichnet, dass der Neigungswinkel $\alpha$ des oberen Trums (108) einstellbar ist.

7. Einrichtung nach einem der vorangehenden Ansprüche, dadurch gekennzeichnet, dass Mittel vorgesehen sind, um die Umlaufgeschwindigkeit des Bandes vorzugsweise stufenlos zu verändern.

**Claims**

1. Device for the pre-thickening of sludge, comprising an endless belt (2) conveyed in circulating fashion in an upper and a lower strand, of which the upper strand (8, 108) forms a separating section and the lower strand (9) comprises a washing section to which washing nozzles (28) are assigned, drive means to keep the belt (2) in circulatory motion, feed means (14) for feeding sludge onto the upper strand (8, 108) adjacently to its leading end, and stripping means (42, 142) assigned to the trailing end of the upper strand in order to remove retained sludge from the latter, characterised in that the belt (2) comprises a web (6) composed of two layers of fibrous nonwoven fabric of different density, of which the outer layer composed of fibrous nonwoven fabric of higher density forms a filter layer and the next layer forms a drainage layer for the clear liquid, and, furthermore, a supporting web (4) for absorbing the tensile and bearing load.

2. Device according to Claim 1, characterised in that the nonwoven layers, which are preferably formed from plastic fibres, rest on the supporting web ( 4 ).

3. Device according to Claim 1 or 2, characterised in that the stripping means (42) form part of a chute (44) for conveying the pre-thickened sludge further.

4. Device according to Claim 3, characterised in that a collecting tank (46) for the pre-thickened sludge is assigned to the end of the chute (44).

5. Device according to one of the preceding claims, characterised in-that the upper strand (108) slopes upwards in the direction of circulation of the band (2).

6. Device according to Claim 1 or 5, characterised in that the angle of slope a of the upper strand (108) is adjustable.

7. Device according to one of the preceding claims, characterised in that means are provided for varying the velocity of circulation of the belt, preferably steplessly.

## Revendications

1. Dispositif pour le pré-épaississement d'une eau boueuse, avec une bande sans fin (2) entraîné en rotation en un brin supérieur et un brin inférieur, dont le brin supérieur (8, 108) forme une zone de séparation et dont le brin inférieur (9) comprend une zone de lavage, dans laquelle sont disposés des gicleurs de lavage (28), avec des moyens moteurs pour maintenir la bande (2) en mouvement de rotation, avec des moyens de chargement (14) pour charger sur celle-ci de l'eau boueuse à proximité de l'extrémité montante du brin supérieur (8, 108), et avec des moyens de raclage (42, 142) disposés à l'extrémité de sortie du brin supérieur pour évacuer de celui-ci la boue retenue, caractérisé en ce que la bande (2) présente une nappe (6) en deux couches de feutre de fibres de densité différente, dont la couche extérieure en feutre de fibres de plus grande densité forme une couche de filtrage et dont la couche suivante forme une couche d'évacuation pour le liquide clarifié, et présente en outre une piste porteuse (4) pour supporter la charge de traction et le poids.

2. Dispositif suivant la revendication 1, caractérisé en ce que les couches de feutre, qui sont de préférence formées de fibres synthétiques, sont posées sur la piste porteuse (4).

3. Dispositif suivant la revendication 1 ou 2, caractérisé en ce que les moyens de raclage (42) font partie d'une goulotte (44) pour l'évacuation de l'eau boueuse pré-épaissie.

4. Dispositif suivant la revendication 3, caractérisé en ce qu'à l'extrémité de la goulotte (44) est placé un bassin de réception (46) pour l'eau boueuse pré-épaissie.

5. Dispositif suivant l'une ou l'autre des revendications précédentes, caractérisé en ce que le brin supérieur (108) monte dans le sens de rotation de la bande (2).

6. Dispositif suivant la revendication 1 ou 5, caractérisé en ce que l'angle d'inclinaison $\alpha$ du brin supérieur (108) est réglable.

7. Dispositif suivant l'une ou l'autre des revendications précédentes, caractérisé en ce qu'il est prévu des moyens pour modifier, de préférence en continu, la vitesse de rotation de la bande.

Fig.1

Fig. 2